(19) **Europäisches Patentamt**
**European Patent Office**
**Office européen des brevets**

(11) Publication number: **0 339 662 B1**

## EUROPEAN PATENT SPECIFICATION

(45) Date of publication of patent specification: **31.05.95**  (51) Int. Cl.⁶: **B60K 41/06**

(21) Application number: **89107721.6**

(22) Date of filing: **28.04.89**

(54) **Method of electronically and adaptively controlling an automatic transmission system.**

(30) Priority: **29.04.88 US 187150**

(43) Date of publication of application:
**02.11.89 Bulletin 89/44**

(45) Publication of the grant of the patent:
**31.05.95 Bulletin 95/22**

(84) Designated Contracting States:
**DE FR GB SE**

(56) References cited:
**EP-A- 0 231 593**
**DE-A- 3 812 672**
**US-A- 4 653 350**
**US-A- 4 671 139**

**US-A 3 956 947**

(73) Proprietor: **CHRYSLER CORPORATION**
**12000 Chrysler Drive**
**Highland Park**
**Michigan 48203 (US)**

(72) Inventor: **Holbrook, Gerald L.**
**866 Downhill Lane**
**Rochester Hills, MI 48063 (US)**
Inventor: **Leising, Maurice B.**
**877 Key West Drive**
**Clawson, MI 48017 (US)**
Inventor: **Benford, Howard L.**
**2055 Bootmaker Lane**
**Bloomfield Hills, MI 48013 (US)**
Inventor: **Mehta, Hemang S.**
**4653 Franklin Park Drive**
**Sterling Heights, MI 48310 (US)**

(74) Representative: **Wehnert, Werner, Dipl.-Ing. et al**
**Patentanwälte**
**Dipl.-Ing. Graalfs,**
**Dipl.-Ing. Hauck,**
**Dipl.-Ing. Wehnert,**
**Dr.-Ing. Döring**
**Dr.rer.nat.**
**Beines**
**Mozartstrasse 23**
**D-80336 München (DE)**

## Description

### Background of the Invention

#### 1. Field Of The Invention

The present invention relates to a method of adaptively controlling a transmission system in a vehicle according to the preamble of claim 1.

#### 2. Description Of Related Art

Generally speaking, land vehicles require three basic components. These components comprise a power plant (such as an internal combustion engine) a power train and wheels. The internal combustion engine produces force by the conversion of the chemical energy in a liquid fuel into the mechanical energy of motion (kinetic energy). The function of the power train is to transmit this resultant force to the wheels to provide movement of the vehicle.

The power train's main component is typically referred to as the "transmission". Engine torque and speed are converted in the transmission in accordance with the tractive-power demand of the vehicle. The vehicle's transmission is also capable of controlling the direction of rotation being applied to the wheels, so that the vehicle may be driven both forward and backward.

A conventional transmission includes a hydrodynamic torque converter to transfer engine torque from the engine crankshaft to a rotatable input member of the transmission through fluid-flow forces. The transmission also includes frictional units which couple the rotating input member to one or more members of a planetary gearset. Other frictional units, typically referred to as brakes, hold members of the planetary gearset stationary during flow of power. These frictional units are usually brake clutch assemblies or band brakes. The drive clutch assemblies can couple the rotating input member of the transmission to the desired elements of the planetary gearsets, while the brakes hold elements of these gearsets stationary. Such transmission systems also typically provide for one or more planetary gearsets in order to provide various ratios of torque and to ensure that the available torque and the respective tractive power demand are matched to each other.

Transmissions are generally referred to as manually actuated or automatic transmissions. Manual transmissions generally include mechanical mechanisms for coupling rotating gears to produce different ratio outputs to the drive wheels.

Automatic transmissions are designed to take automatic control of the frictional units, gear ratio selection and gear shifting. A thorough description of general automatic transmission design principals may be found in "Fundamentals of Automatic Transmissions and Transaxles," Chrysler Corporation Training Manual No. TM- 508A. Additional descriptions of automatic transmissions may be found in US-A 3,631,744, US-A 4,289,048.

In general, the major components featured in such an automatic transmission are: a torque converter as above-mentioned; fluid pressure-operated multi-plate drive or brake clutches and/or brake bands which are connected to the individual elements of the planetary gearsets in order to perform gear shifts without interrupting the tractive power; one-way clutches in conjunction with the frictional units for optimization of power shifts; and transmission controls such as valves for applying and releasing elements to shift the gears (instant of shifting), for enabling power shifting, and for choosing the proper gear (shift point control), dependent on shift-program selection by the driver (selector lever), accelerator position, the engine condition and vehicle speed.

The control system of the automatic transmission is typically hydraulically operated through the use of several valves to direct and regulate the supply of pressure. This hydraulic pressure control will cause either the actuation or deactuation of the respective frictional units for effecting gear changes in the transmission. The valves used in the hydraulic control circuit typically comprise spring-biased spool valves, spring-biased accumulators and ball check valves. Since many of these valves rely upon springs to provide a predetermined amount of force, it will be appreciated that each transmission design represents a finely tuned arrangement of interdependent valve components. While this type of transmission control system has worked well over the years, it does have Its limitations. For example, such hydraulically controlled transmissions are generally limited to one or a very small number of engines and vehicle designs. Therefore, considerable cost is incurred by an automobile manufacturer to design, test, build, inventory and repair several different transmission units in order to provide an acceptable broad model line for consumers.

Additionally, it should be appreciated that such hydraulically controlled transmission systems cannot readily adjust themselves in the field to compensate for varying conditions such as normal wear on the components, temperature swings and changes in engine performance over time. While each transmission is designed to operate most efficiently within certain specific tolerances, typical hydraulic control systems are incapable of taking self-corrective action on their own to maintain operation of the transmission at peak efficiency.

However, in recent years, a more advanced form of transmission control system has been proposed, which would offer the possibility of enabling the transmission to adapt itself to changing conditions. In this regard, US-A 3,956,947, sets forth a fundamental development in this field and discloses the measures as outlined in the preamble of claim 1. Specifically, this patent discloses an automatic transmission design which features an "adaptive" control system that includes electrically operated solenoid-actuated valves for controlling certain fluid pressures. In accordance with this electric/hydraulic control system, the automatic transmission would be "responsive" to an acceleration factor for controlling the output torque of the transmission during a shift from one ratio of rotation (between the input and output shafts of the transmission) to another. Specifically, the operation of the solenoid-actuated valves would cause a rotational speed versus time curve of a sensed rotational component of the transmission to substantially follow along a predetermined path during shifting.

3. Objects Of The Present Invention

It is one of the principal objects of the present invention to provide a significantly advanced electronically controlled transmission which is fully adaptive. By fully adaptive, it is meant that substantially all shifts are made using closed-loop control (i.e., control based on feedback). In particular, the control is closed loop on speed, speed ratio, or slip speed of either $N_t$ (turbine) of the torque converter and $N_e$ (engine) or a combination of $N_t$ and $N_o$ (output) which will provide the speed ratio or slip speed. This transmission control is also capable of "learning" from past experience and making appropriate adjustments on that basis.

Another object of the present invention is to provide an automatic transmission in which the shift quality is maintained uniform regardless of the engine size, within engine performance variations or component condition (i.e. the transmission control system will adapt to changes in engine performance or in the condition of the various frictional units of the transmission).

It is a more specific object of the present invention to provide a method of monitoring an output and adjusting the action effecting the output continuously.

It is a further object of the present invention to achieve exceptionally smooth, yet quick kickdown shifts (i.e., second to first gear), and in so doing, make any powertrain feel more responsive without increasing harshness. Being adaptive, these controls will be capable of compensating for changes in engine or frictional element torque, and provide consistent shift quality over the life of the transmission.

This application is one of several applications all commonly assigned and having similar Specification and Drawings, such as EP-A 339 664, EP-A 341 513, WO-A 89/10 597 and WO-A 89/10281

Summary Of The Invention

To achieve the foregoing objects, the present invention is characterized by the features of claim 1.

The transmission control system includes a microcomputer-based controller which receives input signals indicative of engine speed, turbine speed, output speed (vehicle speed), throttle angle position, brake application, predetermined hydraulic pressure, the driver selected gear or operating condition (PRNODDL), engine coolant temperature, and/or ambient temperature. This controller generates command or control signals for causing the actuation of a plurality of solenoid-actuated valves which regulate the application and release of pressure to and from the frictional units of the transmission system. Accordingly, the controller will execute predetermined shift schedules stored in the memory of the controller through appropriate command signals to the solenoid-actuated valves and the feedback which is provided by various input signals.

Another primary feature of the present invention is to provide an adaptive system based on closed-loop control. In other words, the adaptive control system performs its functions based on real-time feedback sensor information, i.e., the system takes an action which affects the output, reads the effect, and adjusts the action continuously in real-time. This is particularly advantageous because the control actuations can be corrected as opposed to an open loop control in which signals to various elements are processed in accordance with a predetermined program.

In accordance with one aspect of the present invention, the controller is programmed to "learn" from the results of its operation. For example, the controller will calculate the required friction element fill time based upon a historical calculation of the clutch fill volume (i.e., volume of fluid to fill the clutch apply cavity). This form of adaptive control will make calibration of the transmission to new engines and vehicles substantially easier to accomplish.

Brief Description Of The Drawings

Other objects, features and advantages of the present invention will become more fully apparent from the following detailed description of the preferred embodiment, the appended claims and in the accompanying drawings in which:

Figures 1A-C illustrate one physical embodiment of the transmission according to the present invention; Figure 1A is a schematic diagram of the transmission Figure 1B is a sectional elevational view of one embodiment of a transmission constructed according to the present invention; Figure 1C is a partial sectional elevational view of one half of the transmission of Figure 1B; and Fig. 1D is a diagram of the hydraulic system;

Fig. 2 is a partial shift tape graph of the learn methodology for kickdown shifts;

Figure 3 is a shift tape graph for a first to second gear upshift;

Figure 4 is a flow chart of the learn methodology;

Figure 5 is a block diagram of an adaptive control system for an automatic transmission according to the present invention.

## TORQUE CONVERTER ASSEMBLY STRUCTURE

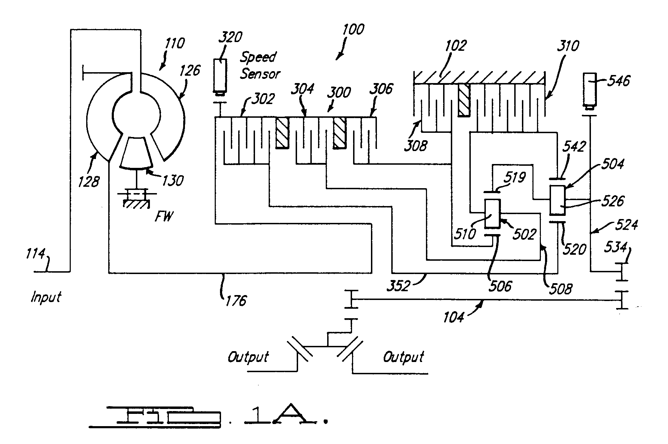

As Fig. 1A shows the torque converter assembly 110 is operative to transmit power from a rotating crankshaft 114 of a prime mover such as an automobile engine (not shown) to the input member of the transmission 100. This power may then be subsequently transmitted to a drive unit 104 (partially shown) which is connected to one or more drive wheels (not shown) of the vehicle. The torque converter 110 is generally comprised of an impeller assembly 126, turbine assembly 128 and a stator assembly 130.

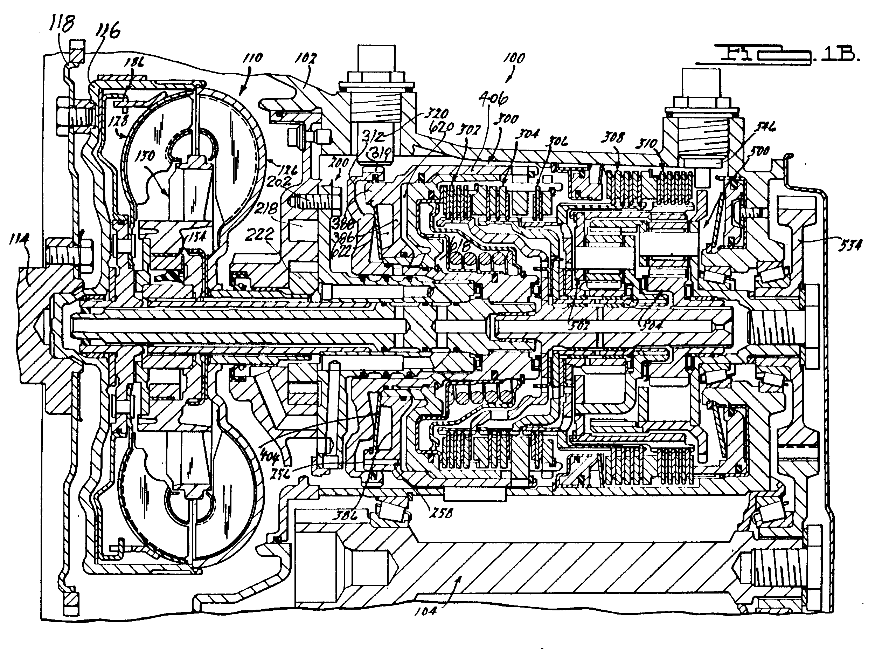

As illustrated in Figure 1B, power is transmitted from the rotating crankshaft 114 of the engine to a front cover member 116 of the impeller assembly 126 through a rotatable plate member 118.

The impeller assembly 126 is fluidly connected in toroidal flow relationship in a known manner with the turbine assembly 128 and the stator assembly 130. The stator plate is mounted on a one-way or over-running clutch assembly, generally indicated at 154. The over-running clutch assembly 154 permits rotation only in the direction of the impeller assembly 126.

The torque converter 110 also includes a lock-up clutch assembly generally indicated at 186, to prevent slip between the rotating crankshaft 114 of the engine and the turbine assembly 128 of the torque converter 110.

The fixed positive displacement pump assembly 200 includes a pump housing 202. An outer gear or rotor 218 with internal teeth (not shown) operates within a bore of the pump housing 202. An inner gear or rotor 222 having external teeth (not shown), cooperative with the teeth of the outer for 218, is disposed within the outer rotor 218.

## MULTI-CLUTCH ASSEMBLY STRUCTURE

During the flow of power through the transmission 100, the multi-clutch assembly 300 provides a means for application and release of two separate members to and from each other. In other words, the multi-clutch assembly 300 is the means by which the gears within the transmission are selectively engaged and disengaged from either the crankshaft 114 of the prime mover or the transmission case 102. Near the input side of the transmission 100, the multi-clutch assembly 300 includes an underdrive clutch 302 (applied in first, second and third gears), overdrive clutch 304 (applied in third and fourth gears) and a reverse clutch 306 (applied in reverse gear) assembles. Near the output side of the transmission 100, the multi-clutch assembly 300 includes a two/four shift clutch assembly 308 (applied in second and fourth gears), and a low/reverse clutch assembly 310 (applied in first and reverse gears).

As illustrated in Figure 1B, an input clutch retainer hub 312 is provided to house the clutch assemblies 302, 304 and 306. The input clutch retainer hub 312 has teeth 319 at its outer periphery. A turbine speed sensor 320 has one end disposed or spaced radially just above the teeth 319 of the input clutch retainer hub 312. The turbine speed sensor 320 is used to monitor or sense the revolution rate of the turbine assembly 128 by counting the teeth 319 passing thereby in relation to time. Preferably, a passive type speed sensor is used for the turbine speed sensor 320. However, it should be appreciated that other suitable speed sensors could be employed within or before the transmission 100 to provide an input speed signal for a transmission controller.

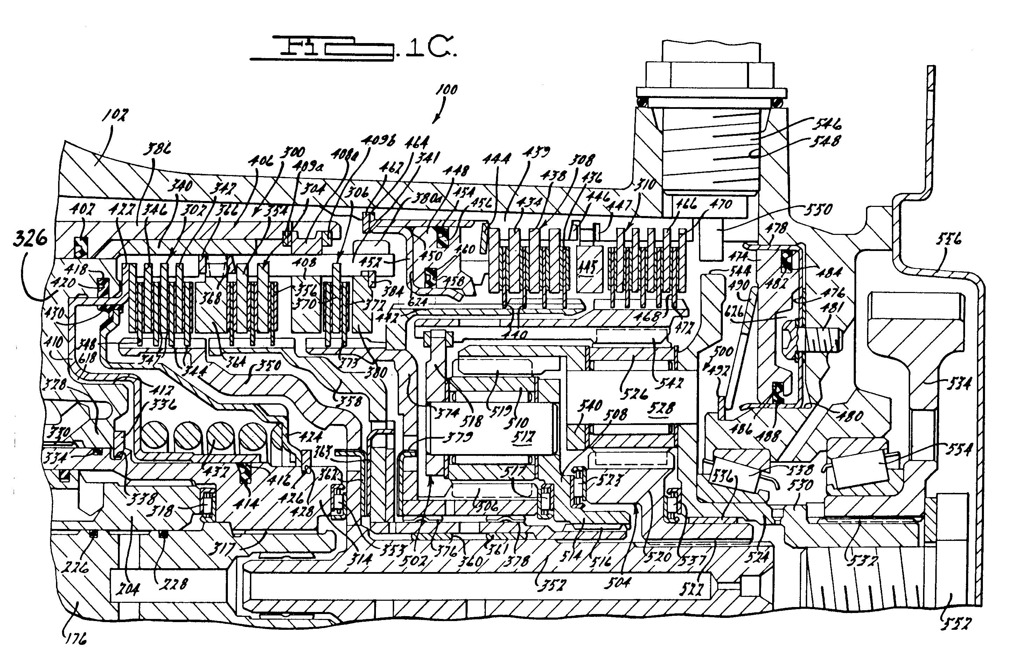

As illustrated in Figure 1C, the underdrive clutch assembly 302 comprises a plurality of axially spaced annular clutch plates 342 and a plurality of axially spaced annular clutch discs 344. The clutch discs 344 are alternated between the clutch plates 342 and when the clutch assembly 302 is not applied, these plates and discs are free to move or rotate relative to each other. The clutch plates 342 have splines (not shown) on their outer diameter and mount in grooves 346 of clutch retainer fingers 341 which are inside input clutch retainer 326. The clutch discs 344 have internal splines (not shown) and are lined with a friction material 347. The clutch discs 344 are mounted in grooves 348 in an underdrive clutch hub 350. The underdrive clutch hub 350 is integral with a rotatable underdrive gear shaft 352 of the gear assembly 500. A thrust bearing 353 is disposed axially between the axially extending portion 314 of the input clutch retainer hub 312 and underdrive clutch hub 350.

The overdrive clutch assembly 304 comprises a plurality of axially spaced annular clutch plates 354 and a plurality of axially spaced annular clutch discs 356. The clutch plates 354 and clutch discs 356 are similar to those of the underdrive clutch assembly 302. Clutch discs 356 are disposed in splines formed in an overdrive clutch hub 358 which is supported by bushings 360 and 361 about the gear shaft 352. Thrust members 362 and 363 are disposed axially between the underdrive clutch hub 350 and overdrive clutch hub 358. The thrust members 362 and 363 are similar to thrust member within the torque converter. An annular reaction plate 364 is secured to the inside of the input clutch retainer 326 axially between the underdrive and overdrive clutch plates and discs 342, 344 354 and 356, respectively. The reaction plate 364 is shared by the underdrive 302 and overdrive 304 clutch assemblies. Annular snap rings 366 and 368 are disposed on the sides of the reaction plate 364. Snap ring 368 is a tapered ring, restraining reaction plate 364 from axial movement.

The reverse clutch assembly 306 comprises at least one annular clutch plate 370 and a plurality of axially spaced annular clutch discs 372. The reverse clutch plate 370 and clutch discs 372 are similar to those of the underdrive clutch assembly 302. The reverse clutch discs 372 are mounted in splines 373 of a reverse clutch hub 374. The reverse clutch hub 374 is supported by bushings 376 and 378 about one end of the overdrive clutch hub 358. A thrust member 379 is disposed axially between the overdrive clutch hub 358 and reverse clutch hub 379. The thrust member 379 is similar to the thrust member within the torque converter. An annular reaction plate 380 is mounted about one end of the flange 340 of the input clutch retainer 326 on one side of the reverse clutch plate 370 and discs 372. Selective snap rings 384 secure the reaction plate 380 from axial movement along the input clutch retainer 326.

To apply the overdrive clutch assembly 304 and reverse clutch assembly 306, a fluid actuating device such as a first hydraulic piston 386 has an axially extending projection 388 which operates in a bore or recess of the input clutch retainer hub 312.

The first hydraulic piston 386 includes an axially extending cylinder portion 406 which has an annular pressure plate member 408 secured at one end thereof by waved snap ring 409a and snap ring 409b. The pressure plate member 408 is interposed between the overdrive clutch assembly 304 and the reverse clutch assembly 306 to engage the clutch plates 354, 370 and discs 356, 372, respectively. Hence, the single pressure plate member 408 is shared by the overdrive clutch 304 and reverse clutch 306 assemblies.

To engage or disengage the underdrive clutch assembly 302, a second hydraulic piston 410 operates in a recess 412 of the input clutch retainer 326. The smooth outer diameter of the hub portion 314 of the input clutch retainer hub 312 has a groove 414 provided with a sealing means such as a synthetic rubber inner seal ring 416, while the outer periphery of recess 412 has a groove 418 for an outer seal ring 420. The second hydraulic piston 410 has one end 422 abutting the clutch plates 342 of the underdrive clutch assembly 302. An annular conically shaped spring retainer member 424 is abuttingly mounted against a snap ring 426. The snap ring 426 is disposed in a groove 428 formed in the axially extending portion 314 of the input clutch retainer hub 312. The other end of the spring retainer member 424 is in sealing engagement with the second hydraulic piston 410 through sealing means 430. The spring retainer member 424 is filled with fluid fed through an orifice (not shown) in the second hydraulic piston 410 from a passage (not shown) in the input clutch retainer hub 312 to provide the pressure balance for the second hydraulic piston 410. The excess fluid is allowed to leak past the snap ring 426 to cool the underdrive clutch assembly 302. A spring means such as a coiled spring 432 is disposed between the spring retainer member 424 and the second hydraulic piston 410 to bias or return the second hydraulic piston 410 to its original position shown in the figure when not applied.

At the output end of the transmission 100, the transmission case 102 houses the output or brake clutch assemblies such as the two/four shift clutch assembly 308 and the low/reverse clutch assembly 310. The two/four shift clutch assembly 308 comprises a plurality of axially spaced annular clutch plates 434 and a plurality of axially spaced annular clutch discs 436. The clutch plates 434 and clutch discs 436 are similar to these of the underdrive clutch assembly 302. The clutch plates 434 are mounted in splines 438 of circumferentially spaced and radially inwardly extending case clutch fingers 439 inside the transmission case 102. The clutch discs 436 are mounted in splines 440 formed in an axially extending flange 442 of the reverse clutch hub 374. A spring means such as a Belleville like spring 444, similar to spring 404, is mounted inside the transmission case 102 on one side of the two/four shift clutch assembly 308. An annular reaction plate 445 is mounted on the other side of the two/four shift clutch assembly 308 and between the two/four shift clutch assembly 308 and the low/reverse clutch assembly 310. The reaction plate 445 is shared by the two/four shift clutch 308 and low/reverse clutch 310 assemblies. Snap rings 446 and 447 are mounted in the transmission case 102 on the sides of the reaction plate 445 to lock it in place. Snap ring 446 is a tapered ring, restraining reaction plate 445 from axial movement.

To apply the two/four shift clutch assembly 308, a third hydraulic piston 448 operates in a cavity 450 formed by an annular piston housing 452. The piston housing 452 is secured to the transmission case 102 by suitable fasting means (not shown). The smooth diameter of the third hydraulic piston 448 has a groove 454 formed in its outer periphery for an outer seal ring 456 and a groove 458 formed in its inner periphery for an inner seal ring 460. A snap ring 462 is disposed in a groove 464 in the transmission case 102 to prevent axial movement of the piston housing 452.

The low/reverse clutch assembly 310 comprises a plurality of axially spaced annular clutch plates 466 and a plurality of axially spaced annular clutch discs 468. The clutch plates 466 and clutch discs 468 are similar to those of the underdrive clutch assembly 302. The clutch plates 466 are mounted in splines 470 of the case clutch fingers 439 inside the transmission case 102. The clutch discs 468 are mounted in splines 472 of the outer periphery of an annulus gear 542 of the gear assembly 500 to be described further herein.

To apply the low/reverse clutch assembly 310, a fourth hydraulic piston 474 operates in a cavity 476 formed by an annular piston housing 478. The piston housing 478 is disposed in an annular recess 480 of the transmission case 102 and secured by suitable fastening means, such as bolts 481, to the transmission case 102. The smooth diameter of the fourth hydraulic piston 474 has a groove 482 formed in its outer periphery for an outer seal ring 484 and a groove 486 formed in its inner periphery for an inner seal ring 488. A spring means such as a Belleville like spring 490, similar to spring 404, is disposed between the fourth hydraulic piston 474 and the gear assembly 500 to bias or return the fourth hydraulic piston 474 to its original position when not applied as shown in the figure. A snap ring 492 retains one end of the spring 490 to the transmission case 102.

## GEAR ASSEMBLY STRUCTURE

During the flow of power, a gear assembly changes the ratio of torque between an input member, such as input shaft 176, and an output member, such as output gear 534 which will be further described herein. The gear assembly comprises a front or first planetary gear set, generally indicated at 502, and an axially spaced rear or second planetary gear set, generally indicated at 504. The first planetary gear set 502 includes a first sun gear 506 at its center. The first sun gear 506 is connected to the reverse clutch hub 374 at its inner periphery and is supported upon bushing 376 and 378. A first planet carrier 508 is disposed about the first sun gear 506. The first planet carrier 508 includes a plurality of circumferentially spaced first pinion gears 510 mounted about shafts 512 connected to the first planet carrier 508. The first planet carrier 508 includes a inner portion 514 spliced at 516 to the overdrive clutch hub 358. A thrust bearing 517 is disposed axially between one end of the first sun gear 506 and inner portion 514 of the first planet carrier 508. The first planet carrier 508 also includes an axially extending outer portion 518 forming a cylinder about the first planetary gear set 502. A first annulus gear 519 is disposed about the first planet carrier 508 and engages the first pinion gears 510.

The rear or second planetary gear set 504 includes a second sun gear 520 at its center which is splined at 522 to the gear shaft 352. A thrust bearing 523 is axially disposed between one end of the inner portion 514 of the first planet carrier 508 and the second sun gear 520. A second planet carrier 524 is disposed about the second sun gear 520. The second planet carrier 524 includes a plurality of circumferentially spaced second pinion gears 526 mounted about shafts 528 connected to the second planet carrier 524. The second planet carrier 524 includes an inner portion 530 spliced at 532 to a rotatable output gear 534 which acts as the output member of the transmission 100. The inner portion 530 of the second planet carrier 524 is supported by a bushing 536 disposed about the second sun gear 520. A thrust bearing 537 is disposed axially between the second sun gear 520 and second planet carrier 524. A tapered roller bearing assembly 538 supports the inner portion 530 of the second planet carrier 524 within the transmission case 102.

The second planet carrier 524 also includes an outer portion 540 connected to the first annulus gear 519. The second annulus gear 542 is disposed about the second planet carrier 524 and engages the second pinion gears 526. The second annulus gear 542 is connected to the outer portion 518 of the first planet carrier 508.

The second planet carrier 524 includes teeth 544 at its outer periphery of the outer portion 540. An output speed sensor 546 threadably engages a bore 548 in the transmission case 102 and has one end 550 disposed or radially spaced just above the teeth 544 of the second planet carrier 524. The output speed sensor 546 is used to monitor or sense the revolution rate (per minute) of the second planet carrier 524 by counting or sensing the teeth 544 passing thereby relative to time. The output speed sensor 546 is similar to the turbine speed sensor 320. It should also be noted that other suitable speed sensors could be used inside or after the transmission 100 to provide an output speed signal to the transmission's controller 3010.

The output gear 534 is secured to the second planet carrier 524 by suitable fastening means such as a bolt 552. The output gear 534 is supported by a tapered roller bearing assembly 554 within the transmission case 102. A rear cover plate member 556 is connected by suitable fastening means (not shown) to the rear or output end of the transmission case 102 to enclose the output gear 534 and the transfer gear (not shown).

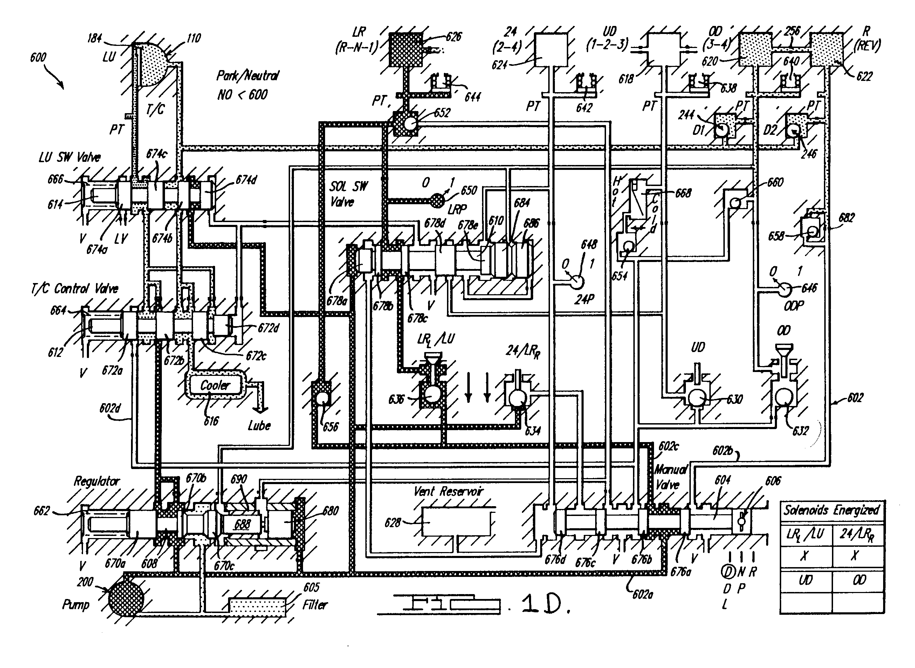

To visualize and understand how power is transmitted from the rotating crankshaft 114 of the engine to the output gear 534 of the transmission 100, the operation of the assemblies described above will now be discussed in connection with Figures 1C and 1D.

## OPERATION OF THE CLUTCHES

As described previously, the input shaft 176 of the transmission 100 is rotating due to torque being transferred from the rotating crankshaft 114 of the engine and through the torque converter 110 to the input shaft 176. The input clutch retainer hub 312 also rotates with the input shaft 176 due to its spline connection 317 with the input shaft 176. The input clutch retainer 326 and clutch plates 342, 354 and 370 also rotate with the input shaft 176 due to the spline connection 330 of the input clutch retainer 326 to the input clutch retainer hub 312 and spline connection of clutch plates 342, 354 and 370 to the input clutch retainer 326.

To apply the underdrive clutch assembly 308, hydraulic pressure from fluid entering between the input clutch retainer 326 and second hydraulic piston 410 moves the second hydraulic piston 410 axially, thereby compressing the spring 432. The second hydraulic piston 410 forces the rotating clutch plates 342 and momentarily stationary discs 344 of the underdrive clutch assembly 302 together and produces frictional force between the clutch plates 342 and discs 344. Because the input clutch retainer 326 and underdrive clutch plates 342 are rotating, the frictional force causes the underdrive clutch discs 344 and hub 350 to rotate, in turn, rotating gear shaft 352 of the gear assembly 500. When the hydraulic fluid to the underdrive clutch assembly 302 is vented, the compressed spring 432 applies a force to the second hydraulic piston 410, thereby returning the second hydraulic piston 410 to its non-applied position as shown in the figure.

To apply the overdrive clutch assembly 304, hydraulic pressure from fluid entering between the first hydraulic piston 386 and the input clutch retainer 326 moves or pulls the first hydraulic piston 386 axially, thereby deflecting axially the spring 404. The pressure plate member 408 of the first hydraulic piston 386 forces the clutch plates 354 and discs 356 of the overdrive clutch assembly 304 together against the reaction plate 364 and produces a frictional force between them. Because the input clutch retainer 326 and overdrive clutch plates 354 are rotating, the frictional force causes the overdrive clutch discs 356 and overdrive clutch hub 358 to rotate, in turn, rotating the first planet carrier 508 and second annulus gear 542. When the hydraulic fluid to the overdrive clutch assembly 304 or first hydraulic piston 386 is vented, the deflected spring 404 applies a force to the first hydraulic piston 386, thereby returning the first hydraulic piston 386 to its non-applied position as shown in the figure.

To apply the reverse clutch assembly 306, hydraulic pressure from fluid entering between the first hydraulic piston 386 and input clutch retainer hub 312 moves or pushes the first hydraulic piston 386 axially thereby deflecting the spring 404 . The pressure plate member 408 of the first hydraulic piston 386 forces the clutch plate 370 and discs 372 of the reverse clutch assembly 306 together against the reaction plate 380 and produces a frictional force between them. Because the input clutch retainer 326 and reverse clutch plate 370 are rotating, the frictional force causes the reverse clutch discs 372 and reverse clutch hub 374 to rotate, in turn, rotating the first sun gear 506. When the hydraulic fluid to the reverse clutch assembly 306 or first hydraulic piston 386 is vented, the deflected spring 404 applies a force to the first hydraulic piston 386, thereby returning the first hydraulic piston 386 to its non-applied position as shown in the figure.

At the output end of the transmission 100, the two/four shift clutch 308 and low/reverse clutch 310 assemblies are used to hold a particular gear element of the gear assembly 500 against rotation by coupling it to the relatively stationary transmission case 102. To apply the two/four shift clutch assembly 308, hydraulic pressure from fluid entering between the third hydraulic piston housing 452 and the third hydraulic piston 448 moves the third hydraulic piston 448 axially, thereby deflecting the spring 444. The third hydraulic piston 448 forces the clutch plates 434 and discs 436 of the two/four shift clutch assembly 308 together against the reaction plate 445 and produces a frictional force between them. Because the two/four clutch plates 434 do not rotate or are stationary, as they are connected to the transmission case 102, the frictional force holds the two/four clutch discs 436 stationary, in turn, holding the flange 442, reverse hub member 374 and first sun gear 506 stationary. When the hydraulic fluid to the two/four shift clutch assembly 308 or third hydraulic piston 448 is vented, the deflected spring 444 applies a force to the third hydraulic piston 448, thereby returning the third hydraulic piston 448 to its non-applied position as shown in the figure.

To apply the low/reverse clutch assembly 310, hydraulic pressure from fluid entering between the fourth hydraulic piston housing 476 and the fourth hydraulic piston 474 moves the fourth hydraulic piston 474 axially, thereby deflecting the spring 490. The fourth hydraulic piston 474 forces the clutch plates 466 and discs 468 of the low/reverse clutch assembly 310 together against reaction plate 445 and produces a frictional force between them. Because the low/reverse clutch plates 466 are stationary, as they are connected to the transmission case 102, the frictional force holds the low/reverse clutch discs 468 stationary, in turn, holding the second annulus gear 542 and first planet carrier 508 stationary. When the hydraulic fluid to the low/reverse clutch assembly 474 or fourth hydraulic piston 474 is vented, the deflected spring 490 applies a force to the fourth hydraulic piston 474, thereby returning the fourth hydraulic piston 474 to its non-applied position as shown in the figure.

## OPERATION OF PLANETARY GEARS

In the neutral N or park P modes of transmission operation, the input shaft 176 (which is attached to the turbine assembly 128) freely rotates with the engine crankshaft 114. Since the input clutch retainer hub 312 is also attached to the input shaft 176, the input clutch retainer hub 312 rotates, in turn, causing the input clutch retainer 326 and clutch plates 342, 354 and 370 to freely rotate with the engine crankshaft 114.

When the transmission 100 is desired to operate in first gear, the underdrive clutch assembly 302 and low/reverse clutch assembly 310 are applied. Hydraulic fluid moves the second hydraulic piston 410 axially away from the torque converter 110 to engage the clutch plates 342 and friction discs 344 of the underdrive clutch assembly 302. This engagement causes the underdrive clutch hub 350 to rotate which, in turn, rotates the gear shaft 352. Because the second sun gear 520 is splined at 522 to the gear shaft 352, rotation of the gear shaft 352 causes the second sun gear 520 to rotate. As the low/reverse clutch assembly 310 is applied by the engagement of the low/reverse clutch plates 466 with the discs 468, the second annulus gear 542 is held stationary. Since the second annulus gear 542 is connected to the first planet 508, the first planet carrier 508 is held stationary. As a result, rotation of the second sun gear 520 causes rotation of the second pinion gears 528 and the second planet carrier 524. Because the output gear 534 is splined at 532 to the second planet carrier 524, rotation of the second planet carrier 524 causes the output gear 534 to rotate. Since the second planet carrier 524 rotates, the first annulus gear 519 also rotates, causing the first pinion gears 510 and first sun gear 506 to freely rotate in first gear. The output gear 534 then transfers the torque from the second planetary carrier 524 to the transfer gear (not shown).

When the transmission 100 is desired to operate in second gear, the underdrive clutch assembly 302 and the two/four shift clutch assembly 308 are applied. Once again, the underdrive clutch hub 350 rotates as described above which, in turn, rotates the gear shaft 352. Rotation of gear shaft 352 causes the second sun gear 520 to rotate. As the two/four shift clutch assembly 308 is applied by engagement of the two/four shift clutch plates 434 with the discs 436, the flange 442, reverse clutch hub 374 and first sun gear 506 are held stationary. Because the transmission 100 has been operating in first gear, the first annulus gear 519 and second planet carrier 524 have been rotating at output speed. Also, the first sun gear 506 has been rotating freely. By holding the first sun gear 506 stationary, the first pinion gears 510 and first planet carrier 508 increase in speed. As a result, the first annulus gear 519, second planet carrier 524 and the output gear 534 rotate at a greater r.p.m. than first gear.

When the transmission 100 is desired to operate in third gear, the underdrive clutch assembly 302 and the overdrive clutch assembly 304 are applied. Once again, engagement of the underdrive clutch assembly 302 causes the second sun gear 520 to rotate as previously described. As the overdrive clutch assembly 304 is applied by engagement of the clutch plates 354 and discs 356 of the overdrive clutch assembly 304, the overdrive clutch hub 358 rotates, in turn, rotating the first planet carrier 508 due to the spline connection at 516. Since the first planet carrier 508 rotates, the first pinion gears 510, first sun gear 506 and second annulus gear 542 also rotate. As a result, the second pinion gears 526 of the second planet carrier 524 rotate, causing the second planet carrier 524 to rotate which in turn, rotates the output gear 534 at input speed or a higher r.p.m. than second gear.

When the transmission 100 is desired to operate in fourth gear, the overdrive clutch assembly 304 and two/four shift clutch assembly 308 are applied. Application of the overdrive clutch assembly 304 causes the overdrive clutch hub 358 to rotate, as previously described. Rotation of the overdrive clutch hub 358 causes the first planet carrier 508 and second annulus gear 542 to rotate. Application of the two/four shift clutch assembly 308 causes the flange 442, reverse clutch hub 374 and first sun gear 506 to be held stationary as previously described. As a result, rotation of the first planet carrier 508 causes the first pinion gears 510, first annulus gear 519 and second annulus gear 542 to rotate. Rotation of the first and second annulus gears 519 and 542, respectively, causes the second pinion gears 526 and second planet carrier 524 to rotate which, in turn, rotates the output gear 534 at a greater r.p.m. than third gear.

When the transmission 100 is desired to operate in reverse gear, the reverse clutch assembly 306 and low/reverse clutch assembly 310 are applied. The reverse clutch assembly 306 is applied by engagement of the reverse clutch plate 370 and discs 372. This engagement causes the reverse clutch hub 374 to rotate which, in turn, rotates the first sun gear 506. Application of the low/reverse clutch assembly 310 causes the first planet carrier 508 and the second annulus gear 542 to be held stationary as previously described. As a result, the first sun gear 506 rotates the first pinion gears 510 which, in turn, rotate the first annulus gear 519 backwards. Rotation of the first annulus gear 519 causes the second planet carrier 524 and second pinion gears 526 to rotate which, in turn, causes rotation of the output gear 534 in a direction opposite to the other gear positions. Rotation of the second pinion gears 526 also causes the second sun gear 520 to rotate freely.

## CLUTCH REACTION AND APPLY PLATES

Referring to Figure 1C, the reaction plate 380 and pressure plate member 408 are shown. The present invention features web means such as an annular web 380a spaced radially at the outer periphery of the reaction plate 380 and connected to the reaction plate 380 at least one location circumferentially, and an annular web 408a spaced radially at the outer periphery of the pressure plate member 408 and connected to the pressure plate member 408 at least one location circumferentially. The webs 380a and 408a are an efficient means of increasing axial rigidity to restrict clutch deflection. The reaction plate 380 and pressure plate member 408 resist loads producing a stress pattern like that found in a Belleville spring (i.e. producing a family of moments along the radial direction).

Clutch apply cavities 618, 620, 622, 624 and 626 are also identified in Figures 1B and 1C, and 1D.

The hydraulic system 600 also includes an underdrive element or clutch solenoid-actuated valve 630, overdrive clutch solenoid-actuated valve 632, two/four shift clutch solenoid-actuated valve 634 and low/reverse clutch solenoid-actuated valve 636 which are shown in Fig. 1D. The solenoid-actuated valves 630, 632, 634 and 636 control the fluid flow to their respective clutch apply cavities 610, 620, 624 and 626.

## SHIFT METHODOLOGY

The present invention provides fully adaptive electronic transmission controls. These adaptive controls perform their functions on real-time feedback sensor information, as is likewise performed by electronic antiskid brake controls. Additionally, the adaptive controls "learn" particular information by monitoring data such as the value for the fill tine and apply rate of the applying element such as a clutch. This information is then stored in the memory of the transmission controller 3010 for future use.

## UPSHIFT METHODOLOGY

The upshift methodology uses the learned values for the fill time and apply rate (torque build-up rate) of the ON-coming or applying element such as a clutch and for the release time of the OFF-going or releasing element such as a clutch. Learning apply element fill time permits timing the beginning-of-fill so as to compensate for orifice size or clutch clearance variations, etc. Learning the apply rate and release time allows compensation for variations in orifice size, clutch capacity, solenoid response, and torque requirement (included to some extend, different engines). Although learning is restricted to the HOT mode, some temperature compensation occurs between summer and winter.

In the power-ON upshift, the methodology adjusts the apply and release events so that release element slip occurs just before the apply element begins to develop torque. Slip must be allowed to occur so that the release and apply events can be identified by speed measurements. In simplified terms, release time is measured as the interval between initial-element-vent and beginning-of-slip; fill time is from beginning-of-fill to end-of-bump-along; and apply rate is from end-of-bump-along to beginning-of-speedchange. Bump-along is a term coined to describe the bang-bang (fixed percent ON-OFF time) control period that the methodology uses to maintain a small amount of backward slip prior to the application of the apply element. The methodology delays either the beginning of the release vent or the beginning of apply fill so as to achieve approximately one cycle of bump-along.

This control methodology reduces the release element pressure to the minimum that will still support the input torque reaction, thereby establishing the optimum beginning conditions for the element exchange. The apply rate, then, is selected to develop the torque needed to begin speed change just as release element net-apply-pressure reaches zero. Thus, the duty-cycle-controlled apply rate matches the ballistic release rate of the OFF-going or releasing element. The purpose of the matched exchange, of course, is to minimize fight between the elements. Release time and apply rate are both learned relative to the throttle angle.

Once the speed change begins, the apply element pressure is controlled to provide the desired turbine acceleration alpha$_t$. This speed change control is the heart of adaptive control since it adapts to changes in engine torque, friction coefficient, etc. and provides consistent control.

The acceptability of the power-OFF upshift must be verified with the appropriate engine control methodology. With carburetors, the engine speed N$_e$ drops quickly and may pull the turbine 128 through the speed change faster than desired. This can result in both elements going or staying off, which, if the throttle is opened, will result in a runaway bump as both elements race to apply. In order to prevent this, methodology was devised which uses both elements to control the speed change and gradually accomplish the hand-off. With the electronic engine control, the engine may vary between power-ON and power-OFF. It may even provide the correct programmed rate past the target speed (N$_t$ = N$_j$ ) without either element controlling, thus defeating the above approach. Methodology has been added which simply turns ON the apply element when the speed change is complete. Also, with this shift, it is desirable to release the OFF-going element quickly to avoid excessive engine braking torque.

The learned term for fill time is time remaining to nearly fill, T$_f$. Using T$_f$ minimizes the possibility of a too aggressive element application and allows the use of a duty cycle to soften the initial application. T$_f$ is actually calculated from the learned clutch fill volume, V$_f$. This term is stored in cubic inches so that different flow rates may be used to calculate T$_f$. This allows the same learned volume to he used for different shifts which may have a different line pressure. The program or methodology continually tracks the fluid volume needed to apply each element.

The learned term for release time, above, is time to nearly release, T$_r$, which is calculated as K$_s$ * T$_s$ - .063. T$_s$ is a table value for the nominal observed release time. K$_s$ is the learned multiplier for that individual package. Since T$_s$ varies with THR (i.e. engine torque), a multiplier provides the best data match for the variables being accommodated. The .063 seconds, together with the T$_f$ differential, provides a margin to ensure that fight is minimized.

## LEARN METHODOLOGY

The only learned quantity used for making downshifts is the fill time of the applying element or clutch. As previously mentioned, the element volumes are actually learned and stored. Fill times are calculated by using the learned element volume and an appropriate flow rate from a look-up table and graph of flow rate characteristics for each element for examples. The learned volume information for a given element is shared between different shifts, both upshifts and downshifts. The flow rate used accounts for the individual hydraulic flow rates and compensates for line pressure differences which exist between different shifts (i.e. for element fill rates, not vent rates).

With a coastdown shift, however, the pump 200 will not, under all conditions, have the capacity to maintain the regulated line pressure. To compensate for the resulting low line pressure, a learned fill rate is used for coastdown shifts only. This fill rate is set at the regulated line pressure level with each start-up (because with cold fluid, the pump 200 will maintain the regulated pressure) and it will learn any reduction in the fill rate with each subsequent shift.

Learning fill time with downshifts is similar to upshifts in that the beginning of apply (end of fill time for the apply element) is identified by the ending of a "hold-speed" control maintained by the release element in power-ON shifts. Implicit with this is the necessity of establishing some "hold-speed" control rather than timing an exact application to be described herein. It is also necessary to handle OFF and ON times correctly since the fill event is seldom a continuous ON; the flow rates, mentioned above, provide this capability.

The learn logic for kickdown shifts tracts the instantaneous volume of the apply element and compares that value with the current fill volume such that the apply element is completely filled at the end of the hold-speed region.

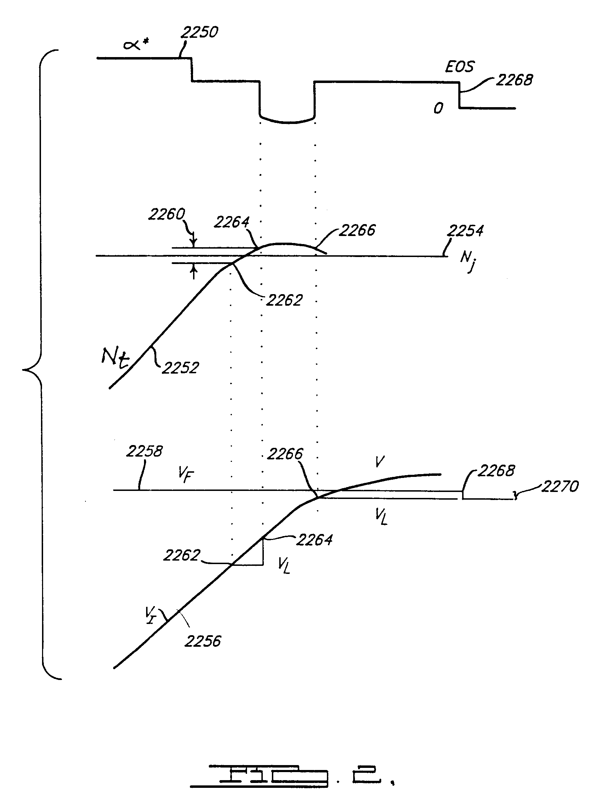

As illustrated in Figure 2, curve 2250 represents a desired acceleration (α*) of the turbine 128. Curve 2252 represents turbine speed N$_t$ and curve 2254 represents a target speed (N$_j$) of the turbine 128. Curve 2256 represents an instantaneous fill volume (V$_I$) of the apply element (one of said friction elements as described) and curve 2258 represents the current fill volume (V$_f$ ) of the apply element. As N$_t$ approaches N$_j$, N$_t$ comes within a predetermined range 2260 of N$_j$. At point 2262 when N$_t$ reaches the lower limit of the predetermined range 2260, the learned volume (V$_L$) of the apply element is latched at that volume of the instantaneous fill volume (V$_I$). Once N$_t$ leaves the upper limit of the predetermined range 2260 at point 2264, the learned volume again tracks the instantaneous fill volume until $N_t$ enters the predetermined region 2260 at point 2266. At point 2266, the learned volume of the apply element is latched at that value of the instantaneous fill volume. At the end of the shift (EOS), a transmission controller 3010 takes a step out of current fill volume ($V_f$) which is a percentage of the difference between $V_f$ and $V_L$ at point 2266.

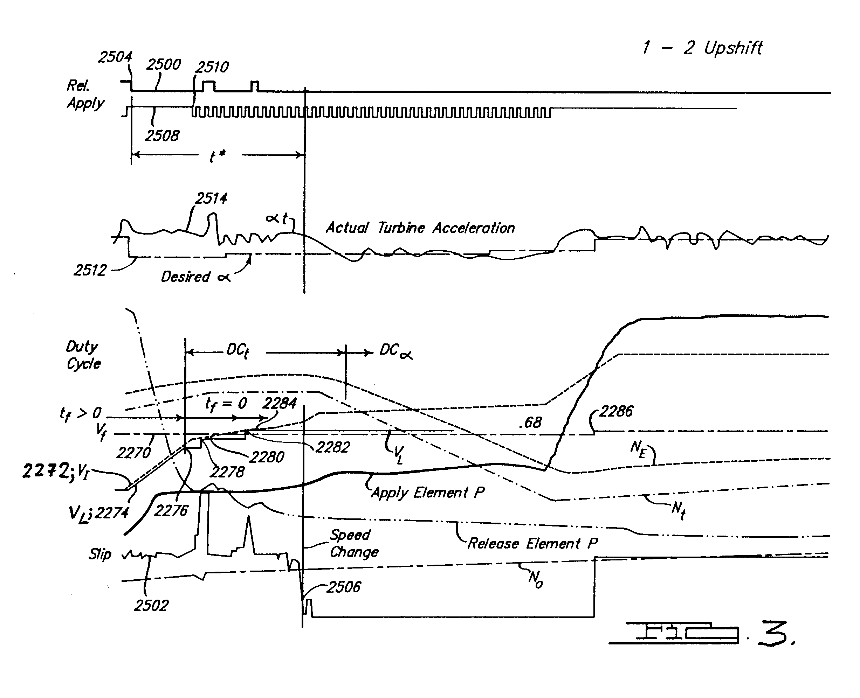

The fill volume ($V_f$) of the apply element is also "learned" and adaptively adjusted based on bump-along (i.e. element slip). As illustrated in Figure 3, a shift tape of the transmission characteristics is shown for a first to second (1-2) upshift. Curve 2270 represents the stored or previously learned current fill volume ($V_f$) of the apply element. Curve 2272 represents the instantaneous volume ($V_I$) of the apply element (i.e. two/four shift clutch 308). Curve 2274 represents the learned volume ($V_L$) .

While a shift is in progress, the learned volume ($V_L$) is set equal to the instantaneous fill volume ($V_I$) whenever ($t_f > 0$) or ($t_f \neq 0$ and $N_f > N_j + 30$). As shown in Figure 3, $V_L$ tracts $V_I$ until point 2276 because $t_f$ was greater than 0. At point 2276, $t_f$ equals zero and $V_L$ stops tracking $V$ and is set equal to the value of $V_I$ at point 2276. When $t_f = 0$, the apply element is filling in the hold-speed region. If $N_t$ is greater than $N_i$ plus a predetermined value such as 30 (i.e. slip occurs), called bump-along, $V_L$ is updated to the value of $V_I$ at point 2278. At point 2278, $V_L$ again tracks $V_I$ until $N_t$ is not greater than $N_i$ plus the predetermined value at point 2280. At point 2280, $V_L$ is set equal to the value of $V_I$ and stops tracking. This methodology is repeated whenever $N_t$ is greater than $N_i$ plus the predetermined value. At the end of the shift, the transmission controller 3010 compares $V_L$ to $V_f$ . If $V_L$ is greater than $V_f$ , as shown in Figure 24D, $V_f$ is adjusted or increased a percentage of difference between $V_L$ and $V_f$ . If $V_L$ equals $V_f$ , no adjustment is made. Otherwise, if $V_L$ is less than $V_f$ , $V_f$ is decreased.

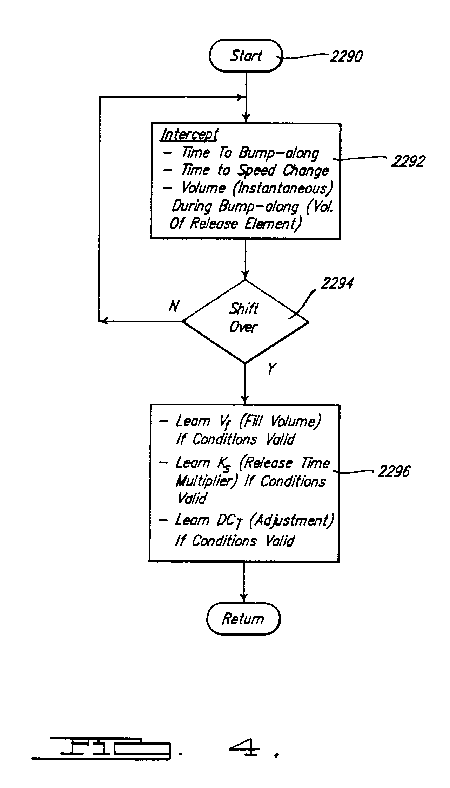

Referring to Figure 4, a flow chart of the learn methodology is shown. At the start of the methodology in bubble 2290, the methodology advances to block 2292. At block 2292, the methodology intercepts or determines the time to bump-along, time to speed change, and instantaneous volume during bump-along of the element. The methodology then advances to diamond 2294 and determines whether the shift has been completed. If no, the methodology loops back to block 2292. If the shift has been completed, the methodology advances to block 2296 and learns the fill volume if the conditions are valid, learns $K_s$ (release time multiplier), if conditions are valid and learns $DC_t$ - (adjustment) if conditions are valid. From block 2296, the methodology returns.

## ELECTRONICALLY CONTROLLED, ADAPTIVE AUTOMATIC TRNASMISSION SYSTEM

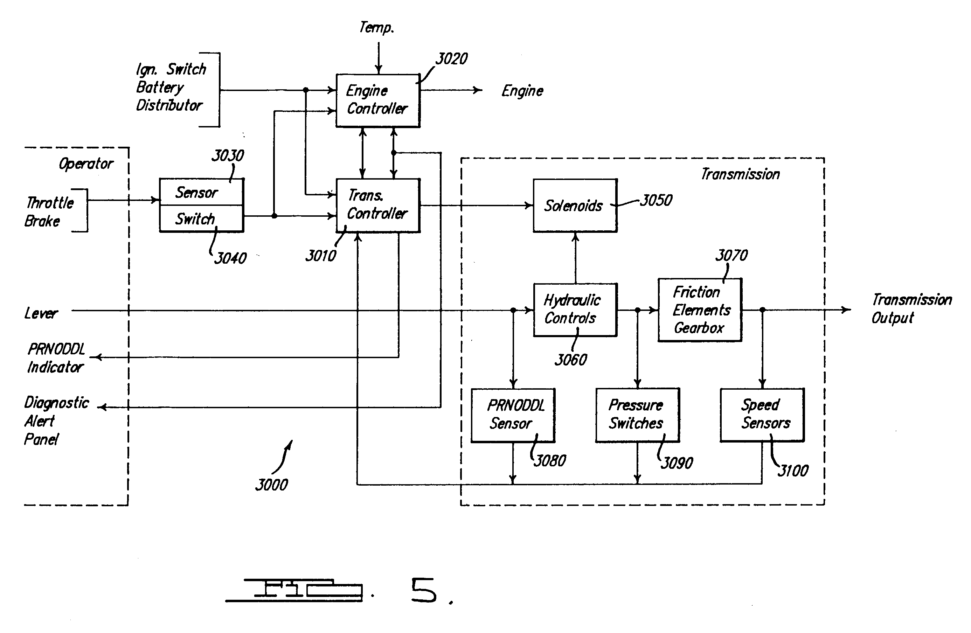

Referring to Figure 5, a block diagram of an adaptive control system 3000 according to the present invention is shown. The adaptive control system 3000 includes the transmission controller 3010 which is capable of both receiving signals from an engine controller 3020 and transmitting signals to this engine controller 3020. While the transmission controller 3010 may be readily adapted to operate without an electronic engine controller, the transmission controller 3010 according to the present embodiment takes advantage of the fact that most automobiles today include a digital or computer based engine controller which receives and processes signals from numerous sensors. For example, Figure 5 shows that both the transmission controller 3010 and the engine controller 3020 receive an input signal indicative of the temperature of the engine (e.g., the coolant temperature). Other exemplary input signals shared by these controllers include one or more signals from an ignition switch, a battery voltage level signal, and a signal from the distributor or other firing angle control mechanism. With respect to the engine controller 3020, this controller will process such signals and transmit appropriate control or command signals to various components of the engine. Typical computer based engine controllers will also generate and transmit advisory signals to a diagnostic alert panel in the passenger compartment to provide a visual and/or auditory indication of particular engine conditions.

As indicated by the reciprocal signal lines, it should be appreciated that the transmission controller 3010 includes the capability of communicating with existing engine controllers. For example, it may be advisable for the transmission controller 3010 to send signals to the engine controller 3020, such as a signal indicating that the transmission 100 is about to shift gears. As will be appreciated from the description below, the transmission controller 3010 is preferably provided with a serial communications interface to permit serial data transfers to be made between the transmission controller 3010 and the engine controller 3020. Additionally, the transmission controller 3010 may also provide diagnostic alert capabilities, such as transmitting suitable advisory signals to the vehicle operator (e.g., "check transmission").

Another example of some signals which may be shared by the transmission controller 3010 and the engine controller 3020 are those provided by a throttle sensor 3030 and a brake switch sensor 3040. The throttle sensor 3030 may be any suitable sensor which will give an indication of the power demand placed upon the engine by the vehicle operator, such as a transducer which will indicate the present position of the throttle. Similarly, the brake switch 3040 may be any suitable sensor which will give an indication of the application of the vehicle brake by the operator, such as a contact switch actuated by the movement of the brake pedal in the vehicle. As will be appreciated from the description below, the transmission controller 3010 includes suitable interface circuits for receiving signals from the throttle sensor 3030 and the brake switch 3040. Further examples of information shared between the controllers are signals concerning vehicle type, engine type, manifold absolute pressure (MAP) and load.

One of the primary functions of the transmission controller 3010 is to generate command or control signals for transmission to the solenoid-actuated valves 630, 632, 634, 636 contained in the hydraulic system 600 (Figure 1D) of the transmission 100. In Figure 5, these solenoid-actuated valves are lumped into a solenoid block 3050 which is contained within a dashed block labeled "Transmission". This "Transmission" block represents a suitable transmission structure which will operate in conjunction with the transmission controller 3010, such as the transmission 100 described above. Thus, in the transmission 100, the solenoid block 3050 would comprise the solenoid-actuated valves 630, 632, 634 and 636. Similarly, hydraulic control block 3060 would comprise other valves contained in the hydraulic system 600, such as a pressure regulator valve 608, a manual valve 604, a T/C control valve 612 and so forth. Likewise, a friction elements gear box block 3070 would comprise the multi-clutch assembly 300 and the gear assembly 502, 504 as described above. However, it should be appreciated that the adaptive control system 3000 according to the present invention may be used in conjunction with other suitable transmission structures in the appropriate application.

Figure 5 also illustrates that the "Transmission" block includes a PRNODDL sensor block 3080 which is responsive to a gear shift lever that is under operator control. The PRNODDL sensor block 3080 may be comprised of one or more suitable sensors which are capable of providing an indication to the transmission controller 3010 of the transmission operating mode selected through the manual actuation of the gear shift lever.

**Claims**

1. A method of adaptively controlling a transmission system in a vehicle having an engine, said transmission system (100) including an input member (176), an output member (534), a gear assembly (502,504) for changing the ratio of torque between the input member and output member, a plurality of friction elements (302,304,306,308,310) for shifting the gear assembly (502,504), a fluid actuating device being movable for applying at least one friction element, at least one solenoid-actuated valve or valve operated by a solenoid-actuated pilot valve being movable in response to the presence or absence of electrical power to the valve for directing fluid flow between a fluid source and the fluid actuating device, sensors providing input signals indicative of predetermined conditions, including a speed sensor (320) monitoring the speed of said input member (176) and a controller (3010) having a memory for processing and storing the input signals and predetermined values and providing output signals to control the solenoid actuated valves, the method comprising the steps of monitoring an output signal and adjusting the action effecting the output signal continuously in the vehicle transmission system, characterized by monitoring the instantaneous fluid volume ($V_I$; curve 2256) of at least one of said friction elements, setting a learned volume value ($V_L$ and point 2262) equal to the instantaneous fluid volume value $V_I$ indicative of the instantaneous fluid volume whenever the monitored speed of the input member is within a predetermined speed range (2260), comparing the learned volume value to a stored fill volume value (curve 2270) in the memory at the end of the shift; and adjusting the stored fill volume value based on the difference between the learned volume value and the stored fill volume value.

2. A method as set forth in claim 1, wherein said transmission system (100) includes a torque converter assembly (110) for transmitting torque between the engine and the input member and said input member speed is monitored by monitoring the speed of a turbine (128) in said torque converter assembly.

3. A method as set forth in claim 2, wherein the step of performing setting a learned volume equal to an instantaneous fluid volume value indicative of the instantaneous fluid volume is performed when the time to nearly fill the friction element is approximately zero and the step of resetting the learned volume value equal to the instantaneous fluid volume value is performed whenever slip is detected.

4. A method as set forth in one of claims 1 to 3, wherein for a given shift of the gear assembly, at least one said friction element is released and said method further includes the step of identifying a vent rate of a release friction element when slip of the release friction element occurs during an upshift of the gear assembly.

5. A method as set forth in one of claims 1 to 3, wherein for a given shift of the gear assembly, at least one said friction element is applied and said method further includes the step of identifying the fill volume of an apply friction element when slip of a release friction element occurs during an upshift of the gear assembly.

6. A method as set forth in one of claims 1 to 3, wherein for a given shift of the gear assembly, at least one said friction element is applied and at least one said friction element is released and said method further includes the step of identifying an apply rate of an apply friction element when slip of a release element occurs during an upshift of the gear assembly.

**Patentansprüche**

1. Verfahren zum adaptiven Steuern eines Getriebesystems in einem Fahrzeug mit einem Motor, wobei das Getriebesystem (100) ein Eingangsglied (176) aufweist, ein Ausgangsglied (534), ein Getriebe (502,504) zum Ändern des Drehmomentverhältnisses zwischen Eingangs- und Ausgangsglied, mehrere Reibelemente (302,304,306,308,310) zum Schalten des Getriebes (502,504), eine fluidbetätigte Einrichtung, die bewegbar ist, um mindestens ein Reibelement einzurücken, mindestens ein magnetbetätigtes Ventil oder ein von einem magnetbetätigten Vorsteuerventil betätigtes Ventil, das abhängig vom Ein- bzw. Ausschalten elektrischer Energie am Ventil bewegbar ist, um eine Fluidströmung zwischen einer Fluidquelle und der fluidbetätigten Einrichtung zu steuern, Sensoren zur Abgabe von Eingangssignalen zum Anzeigen vorbestimmter Bedingungen, einen Drehzahlsensor (320) zur Überwachung der Drehzahl des Eingangsgliedes (176,) und ein Steuergerät (3010) mit einem Speicher zum Verarbeiten und Speichern der Eingangssignale und vorbestimmter Werte und zum Liefern von Ausgangssignalen, um die magnetbetätigten Ventile anzusteuern, wobei das Verfahren die Schritte aufweist, daß ein Ausgangssignal überwacht und die Funktion eingestellt wird, die kontinuierlich das Ausgangssignal im Fahrzeuggetriebesystem zur Folge hat, dadurch gekennzeichnet, daß das augenblickliche Fluidvolumen ($V_I$ ; Kurve 2256) mindestens eines der Reibelemente überwacht wird, ein angelernter Volumenwert ($V_L$ und Punkt 2262) gleich dem augenblicklichen Fluidvolumenwert ($V_I$), der das augenblickliche Fluidvolumen anzeigt, immer dann gesetzt wird, wenn die überwachte Drehzahl des Eingangsgliedes in einem vorbestimmten Drehzahlbereich (2260) liegt, der angelernte Volumenwert mit einem gespeicherten Füllvolumenwert (Kurve 2270) im Speicher am Ende des Schaltvorganges verglichen wird; und der gespeicherte Füllvolumenwert, der auf dem Unterschied zwischen dem angelernten Volumenwert und gespeicherten Füllvolumenwert basiert, eingestellt wird.

2. Verfahren nach Anspruch 1, bei dem das Getriebesystem (100) einen Drehmomentwandler (110) zum Übertragen von Drehmoment von dem Motor auf das Eingangsglied aufweist und die Drehzahl des Eingangsgliedes durch Überwachen der Drehzahl einer Turbine (128) des Drehmomentwandlers überwacht wird.

3. Verfahren nach Anspruch 2, bei dem der Schritt, daß ein angelerntes Volumen gleich einem augenblicklichen Fluidvolumenwert gesetzt wird, der das augenblickliche Fluidvolumen anzeigt, dann erfolgt, wenn die Zeit zum beinahe Füllen des Reibelementes annähernd Null ist und der Schritt, daß der angelernte Volumenwert gleich dem augenblicklichen Fluidvolumenwert zurückgesetzt wird, immer dann erfolgt, wenn Schlupf festgestellt wird.

4. Verfahren nach einem der Ansprüche 1 bis 3, bei dem für ein Schalten des Getriebes mindestens ein Reibelement ausgerückt wird und das Verfahren ferner den Schritt aufweist, daß ein Entlüftungswert des Ausrück-Reibelementes identifiziert wird, wenn Schlupf des Ausrück-Reibeelementes beim Heraufschalten des Getriebes auftritt.

5. Verfahren nach einem der Ansprüche 1 bis 3, bei dem für ein Schalten des Getriebes mindestens ein Reibelement eingerückt wird und das Verfahren ferner den Schritt aufweist, daß das Füllvolumen des Einrück-Reibelementes identifiziert wird, wenn Schlupf eines Ausrück-Reibelementes beim Heraufschalten des Getriebes auftritt.

6. Verfahren nach einem der Ansprüche 1 bis 3, bei dem für ein Schalten des Getriebes mindestens ein Reibelement eingerückt und mindestens ein Reibelement ausgerückt wird, und das Verfahren ferner den Schritt aufweist, daß ein Einrückwert eines Einrück-Reibelementes identifiziert wird, wenn beim Heraufschalten des Getriebes Schlupf eines Ausrück-Elementes auftritt.

**Revendications**

1. Procédé pour commander adaptativement un système de transmission dans un véhicule ayant un moteur, ledit système de transmission (100) comprenant un organe d'entrée (176), un organe de sortie (534), un ensemble d'engrenages (502, 504) pour changer le taux des couples entre l'organe d'entrée et. l'organe de sortie, une pluralité d'éléments de friction (302, 304, 306, 308, 310) pour changer l'ensemble d'engrenages (502, 504), un dispositif d' actionnement de fluide étant mobile pour appliquer au moins un élément de friction, au moins une valve actionnée par solénoide ou valve commandée par une valve pilote actionnée par solénoide étant mobile en réponse à la présence ou l'absence d'une puissance électrique à la valve pour diriger l'écoulement de fluide entre une source de fluide et le dispositif d'actionnement de fluide, des capteurs fournissant des signaux d'entrée indiquant des conditions prédéterminées, incluant un capteur de vitesse (302) surveillant la vitesse dudit organe d'entrée (176) et un dispositif de commande (3010) ayant une mémoire pour traiter et stocker les signaux d'entrée et des valeurs prédéterminées et pour fournir des signaux de sortie pour commander les valves actionnées par solénoide, le procédé comprenant les étapes consistant à surveiller un signal de sortie et à régler l'action de mise en oeuvre du signal de sortie continuellement dans le système de transmission du véhicule, caractérisé par la surveillance du volume de fluide instantané ($V_I$ ; courbe 2256) d'au moins l'un desdits éléments de friction, par le réglage d'une valeur de volume apprise ($V_L$ et point 2262) pour qu'elle soit égale à la valeur du volume de fluide instantanée $V_I$ indiquant le volume de fluide instantané, à chaque fois que la vitesse surveillée de l'organe d'entrée se trouve à l'intérieur d'une plage de vitesse prédéterminée (2260), par la comparaison de la valeur de volume empirique avec une valeur de volume de remplissage stockée (courbe 2270) dans la mémoire à la fin du changement; et par le réglage de la valeur de volume de remplissage stockée sur la base de la différence entre la valeur de volume apprise et la valeur de volume de remplissage stockée.

2. Procédé selon la revendication 1, dans lequel ledit système de transmission (100) comprend un ensemble de convertisseur de couple (110) pour transmettre le couple entre le moteur et l'organe d' entrée, et ladite vitesse de l'organe d'entrée est surveillée en surveillant la vitesse d'une turbine (128) dans ledit ensemble de convertisseur de couple.

3. Procédé selon la revendication 2, dans lequel l'étape consistant à régler un volume appris pour qu'il soit égal à une valeur de volume de fluide instantanée indiquant le volume de fluide instantané est exécutée lorsque le temps pour presque remplir l'élément de friction est approximativement zéro et l'étape d'un nouveau réglage de la valeur de volume apprise égale à la valeur de volume de fluide instantanée est exécutée à chaque fois qu'un glissement est détecté.

4. Procédé selon l'une des revendications 1 à 3, dans lequel pour un déplacement donné de l'ensemble d'engrenages, au moins l'un desdits éléments de friction est libéré, et ledit procédé comprend en outre l'étape consistant à identifier un taux de sortie d'air d'un élément de relâchement de friction lorsqu'un glissement de l'élément de relâchement de friction se produit pendant un changement de vitesse en haut de l'ensemble d' engrenages.

5. Procédé selon l'une des revendications 1 à 3, dans lequel pour un déplacement donné de l'ensemble d'engrenages, au moins l'un desdits éléments de friction est appliqué, et ledit procédé comprend en outre l'étape consistant à identifier le volume de remplissage d'un élément d'application de friction lorsqu'un glissement d'un élément de relâchement de friction se produit pendant un changement de vitesse en haut de l'ensemble d'engrenages.

6. Procédé selon l'une des revendications 1 à 3, dans lequel pour un déplacement donné de l 'ensemble d 'engrenages, au moins l'un desdits éléments de friction est appliqué et au moins l'un desdits éléments de friction est libéré, et ledit procédé comprend en outre l'étape consistant à identifier un taux d'application d'un élément de friction d'application lorsqu'un glissement d'un élément de relâchement se produit pendant un changement de vitesse en haut de l'ensemble d 'engrenages.

FIG. 1A.

FIG. 1B.

FIG.1C.

FIG. 1D.

| Solenoids Energized | |
|---|---|
| $LR_\ell /LU$ | $24/LR_R$ |
| X | X |
| UD | OD |
| | |

EP 0 339 662 B1

EP 0 339 662 B1

FIG. 2.

19

1 – 2 Upshift

FIG. 3.

Start — 2290

Intercept
– Time To Bump–along
– Time to Speed Change
– Volume (Instantaneous)
  During Bump–along (Vol.
  Of Release Element) — 2292

Shift Over — 2294

N

Y

– Learn $V_f$ (Fill Volume)
  If Conditions Valid

– Learn $K_s$ (Release Time
  Multiplier) If Conditions
  Valid

– Learn $DC_T$ (Adjustment)
  If Conditions Valid — 2296

Return

FIG. 4.

FIG. 5.

EP 0 339 662 B1